# EUROPEAN PATENT APPLICATION

(11) **EP 1 607 892 A1**
(43) Date of publication of application: **21.12.2005**
(21) Application number: 04102816.8
(22) Date of filing: 18.06.2004
(51) Int. Cl.: G06F 17/60

(54) **A method and system adapted to enable an electronic payment of mobile device insurance.**

(71) Applicant: Hannon, John, Blackrock, Dublin (IE); Kearns, Thomas, 66260 San Pedro Garza Garcia, N.L. (MX)
(72) Inventor: Hannon, John, Blackrock, Dublin (IE); Kearns, Thomas, 66260 San Pedro Garza Garcia, N.L. (MX)
(74) Representative: Moore, Barry

(57) **Abstract**

The invention relates to a mobile telecommunication network and specifically a network adapted to provide a pattern identifier and risk analysis system and methodology to enable users of mobile devices within the network to avail of insurance for their devices. A preferred embodiment of providing a pre-paid subscriber with the facility to avail of insurance is provided.

## Description

### Field of the Invention

The present invention relates to mobile phones or other wireless telecommunication devices and in preferred embodiments includes a pattern identifier and risk analysis system and methodology. The invention particularly relates to a system and methodology that is adapted to interface with a telecommunication network infrastructure so as to determine the activity of a user operating a wireless communications device within the context of the network. The present invention more particularly relates to technical networking systems, data acquisition, software and data transfer, and processing systems, payment processing systems, and other network infrastructure components that combine to provide a system for monitoring wireless communications device operational characteristics and user behaviour so as to obtain increased amounts of data relating to usage by that user. This information can be used for a variety of purposes including in one preferred application, means for providing a more accurate determination of a cost of insurance for the device and to enable a user to more easily avail of the insurance and to subsequently charge and process payment for the insurance cost. In another preferred application, the ability to monitor device usage allows the system to copy at appropriate times the software and data from a user's mobile device across the network to a safe storage area for restoration in the event of a loss of such data and software as part of the process of fulfilling an insurance claim. In this case the system will also be able to alter the insurance premium to reflect the extra claim fulfilment capabilities being provided. The invention also relates to a system and method adapted to enable a user of a mobile device who subscribes to a telecommunication network in a pre-paid manner to acquire and benefit from mobile phone insurance, in either a constant or selective manner.

### Background Of The Invention

The concept of insurance is well known. In return for payment of a premium, a user is then covered against certain activities and/or incidents. Insurance has applications in many fields such as personal liability and also in the protection of certain possessions against loss/theft or damage. Typically a user is assessed on the basis of certain actuarial parameters or sectors and an appropriate charge is then calculated for that user. This usually requires the allocation of the user to a certain risk category class and the insurance premium appropriate to that class is calculated for the users within the class. This is well known and relatively simple to implement in the case of for example health insurance or the like but is more difficult to assess for other devices for which risk may fluctuate depending on usage. Such devices include mobile communications devices. Within the present invention the terms mobile communication device, wireless device or mobile device is intended to cover mobile or wireless telephones, personal digital assistants (PDA's), mobile gaming devices, and the like, where the devices have the ability to communicate in some way through a wireless communications network.

Conventional methods for determining costs, charging, and processing payment of wireless device insurance to date have been limited to very basic techniques. Cost determination systems are virtually non-existent with the result that effectively the same amount is charged to all device users that have selected insurance, with the only differentiation in some cases according to the type of device. Known methods of charging and payment include through the bills of users that are "post paid" subscribers to the mobile communications network, who then may pay through a direct debit or cash payment. The payment is for charges already incurred. In a "post paid" implementation, if the user wishes to avail of insurance for their device, the user is initially classified within a specific insurance risk grouping and an appropriate tariff is calculated for that user. The tariff can then be paid in a once off initial payment or alternatively split between the regular invoices that the user has agreed to pay as part of their contract. This type of contract is contrary to the basis for many people's use of a "pre-paid" subscription plan i.e. they don't wish to have any type of regular outgoings that they are not in control of.

In a "pre paid" environment the user does not enter into a contract for a specified period with a mobile operator. Instead, the payments made by the user are in anticipation of charges, i.e. a balance is purchased and associated with the mobile device of the user and subsequent use decrements that balance. In practice, the user purchases a mobile device and through for example the purchase and use of "top-up" cards or the like can provide their device with credit to enable them to make calls and utilise other wireless services. It will be appreciated that the "top-up" card example is only illustrative of the type of balance increment that may be used for a pre-paid billing system, and the term top-up within the present invention is meant to cover any technique that may be used to increment the account of a prepaid mobile phone user.

The "top-up" cards are available in predefined value amounts and once a user has exhausted the credit provided by one "top-up" card it is then necessary to purchase an additional card and to repeat the credit process. The user therefore determines the frequency and place of purchase of these "top-up" cards. Such behaviour and use of "pre paid" mobile devices is very popular in certain sectors of the market; specifically in the youth sector of developed markets and in most developing markets. It is convenient for these sectors to adopt this type of mobile device subscription as they are in control of spending behaviour.

It is however very difficult for the mobile operators to regulate and also to determine usage patterns. Despite the fact that these users have decided to adopt a certain type of mobile phone usage, it does not mean that their usage is any less susceptible to the factors for which the post-paid users obtain insurance. However, heretofore it has been difficult technically for a mobile operator to provide such users with the benefits of insurance on their mobile devices as the behaviour and payment pattern of the user did not lend itself to such association, i.e. it is difficult to extract regular payments when users top-up irregularly. It is possible to obtain mobile communications device insurance through other insurance channels such as for example as part of a "home insurance" policy. However, this option may not be available to many users. It will also be appreciated that each user that insures their phone with one of the other insurance channels represents potential lost revenue to the mobile phone operator. There is therefore a need to provide a system and method that enables users of "pre paid" mobile devices to easily avail of insurance for their activities using the device.

A further problem with existing wireless device insurance cost determination systems is that the calculated costs often bear little relevance to the likelihood of a claim subsequently occurring. As mentioned above, rating systems within the context of insurance are known, and the use of mobile devices to transmit information indicative of user patterns is also known. Such an example is US6064970 which describes a method and system of determining a cost of automobile insurance based upon monitoring, recording and communicating data representative of operator and vehicle driving characteristics. The cost is adjustable retrospectively and can be prospectively set by relating the driving characteristics to predetermined safety standards. The method comprises steps of monitoring a plurality of raw data elements representative of an operating state of the vehicle or an action of the operator. This data can then be transmitted to a central data processing server where it may be used to assess a correct rating for that automobile user. When the insurance premium is next up for renewal, the tariff payable will be based on the actual historical data related to that specific user.

Another example of such monitoring of user behaviour is described in US6502020. This specification describes an ongoing driving habit monitoring system used by insurance companies to more accurately determine the driving habits of their policyholders or authorized drivers in order to more correctly estimate their risk of loss. The system uses a monitoring device located in the insured party's motor vehicle. Each monitoring device is coupled to a GPS receiver, that provides physical location information, and to a wireless modem capable of connecting to a wireless communication network. The system also includes a central computer connected to a wide area network that is able to continuously or intermittently receive movement information from the monitoring device as it travels in a specific region covered by the wireless communication network. The central computer uses a driving monitoring software program and several ancillary databases containing roadway information for a region, route information, and traffic pattern information. Insurance companies or other authorized users of the system are able to log onto the central computer to the information in the database.

A further example of insurance systems is US patent application US20030033173 of Suzuki et al. In this application a portable telephone is used to control the activation and duration of specific insurance policies specifically travel insurance. A specific type of portable telephone is required, which is modified in order to ease the communication between the mobile user and the computer systems of the insurer. When a user wishes to activate their insurance they use the specific buttons provided on their modified portable telephone to effect the communication link. When they wish to terminate the insurance they can similarly communicate this desire to the computer network. The benefit of this application lies in the portable telephone controlling the duration of the insurance cover, which can lead to reduced costs for the user. The telephone can also communicate periodically position and distance related information pertinent to the user to the insurance computer thereby enabling a modification of the premium. This system is beneficial in that insurance is related to the activity of the user but for billing purposes requires information about the user, as a tariff is calculated and then dispatched to the user in the usual manner. It is therefore not suitable for mobile phone insurance where the user utilises a pre-paid system, as in such systems the user is to all effect anonymous to the system. It also requires a specific type of portable telephone modified so as to enable the communication. This is both cumbersome and difficult to provide to all users. It is also a push from the user as to their information as opposed to the network monitoring their usage pattern independently of the user.

Although both US6064970 and US6502020 describe the use of a portable telephones to transmit information, such use is no more than the intended purpose and application of such telephones. Similarly US2003/0033173 albeit using a portable telephone to control the insurance, cannot be used on all mobile devices as it requires specific hardware modifications.

In the context of mobile devices themselves, however, current rating systems, in the sense of those employed for other types of insurances e.g. motor vehicle insurance rating systems, are virtually non-existent. Conventional systems cannot collate data that reliably predicts the manner or safety of future operation of the wireless device so as to determine a premium specific to that user for their mobile device insurance. The absence of accumulated relevant data for computation of a fair cost of wireless device insurance has a necessity for an improved system for more reliably and accurately accumulating data having a highly relevant evidential value towards predicting the actual manner of a wireless device's future operation. Heretofore it has not been possible to accurately accumulate and assess the risk profile of a user based on that user's behaviour and activities. There is therefore a technical requirement for a system that can provide information on the activity and usage of a wireless device and further for a system that can utilise that information for risk analysis and assessments. There is a further requirement for a system that can enable a calculation of an appropriate insurance tariff for a user and bill that user appropriate to their usage of their mobile device and risk of potential claim. There is a yet a further requirement for a system and methodology that enables the provision of and billing for mobile phone insurance, to those users that use pre-paid subscription plans and are otherwise anonymous to the mobile network operators (MNO's).

A further problem with existing wireless device insurance provision systems is that in the event of loss of / damage to a user's device, the claim fulfilment process often only provides the user with a replacement handset. However, a significant element of the value to a user of a modern wireless device derives from the software and data that resides on the device. This software and data is constantly added to and altered by the subscriber through the use of data-related services e.g. sending / receiving messages; downloading software applications such as programs, ringtones, and logos; storing data on software applications that reside on the device such as personal organisation data; storing contact details. Other such software and data will be familiar to a person skilled in the art. The restricted nature of data restoration services in the context of existing mobile device insurance claim fulfilment processes creates a further requirement for a system that will both monitor the usage of the device by the subscriber and in the event of loss or destruction of the device enable the user to load the data that was present on the previous device on the new device.

### Summary Of The Invention

The present invention provides a system and method that enables a prepaid mobile phone user to avail of insurance for their mobile device. The system is particularly adapted to tailor the payment for the mobile device based on the regularity of top up requests made by a pre-paid user within the prescribed mobile network.

The invention also provides a system and method that can determine a risk analysis and thereafter an appropriate premium for a wireless communications device operator based upon monitoring, recording and communicating data representative of operator and device operation characteristics, whereby the cost is adjustable according to operation characteristics data.

In accordance with a preferred embodiment of the present invention, a system and methodology are provided that enables a processing, charging and payment for the cost of wireless communications device insurance through the billing systems already available to the subscriber.

The system of the present invention provides for a monitoring of a plurality of raw data elements representative of an operating state of a wireless communications device and action of the user. Selected ones of the plurality of raw data elements are recorded when they are determined to have an identified relationship to the insured risk associated with the device. The recorded elements are consolidated for processing and conversion into a premium rate for charging to the user. This system then charges the calculated premium rate to the user and processes payment using the appropriate available billing systems.

In accordance with a further aspect of the present invention, the system comprises an apparatus for immediately communicating to a central insurance database, information representative of the insured risk of a handset based on the handset device operating state and user actions.

The present invention uses information acquired from the wireless communications device usage and operation to more accurately assess device usage and thereby derive insurance costs more precisely and fairly. Examples of possible actuarial classes developed from wireless communications device provided data include device type, time spent on voice / data calls, messaging patterns, time switched on/off, applications downloaded, areas of use, and frequency of usage. By providing for more specific actuarial classes the present invention provides for a better indication of loss because the actuarial classes are based on actual use of the wireless communications device and the behaviour demonstrated by the user. This will allow the consumers unprecedented control over the ultimate cost of their wireless communications device insurance.

One benefit obtained by use of the present invention is a system that will provide precise and timely actuarial information about the current operation of an insured wireless communications device that will enable an accurate determination of operating characteristics, including such features as calls made, time and location of use. This actuarial information can be used to establish actual usage based insurance charges, eliminating rating errors that are prevalent in traditional systems and will result in wireless communications device insurance charges that can be directly controlled more effectively by individual subscribers.

It is another benefit of the subject invention that conventional wireless communications device electronics are easily supplemented by system components to extract selected insurance relevant data from the device.

The invention has specific application in pre-paid subscription environments where a real time deduction of a premium associated with the usage of the handset can be made from a top up operation associated with that user so as to enable pre-paid users to avail of wireless communications device insurance.

The present invention may also in certain embodiments use information acquired from the wireless communications device usage and operation to ascertain what software and data has been stored on the mobile device by the user. This present invention uses this usage information to copy this software and data from the user's mobile device across the mobile network to a back-up storage location at appropriate times, for example after the user has significantly altered the software and data residing on the device. The user will be given the option as to whether or not this service is provided. The invention then adjusts the premium charge appropriately to reflect the extra cover being provided. Then, as part of the process of insurance claims fulfilment, the present invention copies this stored data from the back-up storage location to the user's replacement mobile device via the mobile network.

Other benefits and advantages of the subject new wireless communications device insurance cost determination and payment process will become apparent to those skilled in the art upon a reading and understanding of the specification.

### Brief Description Of The Drawings

The present invention will now be described with reference to the accompanying drawings in which:
FIG. 1 is a schematic overview of the components of a wireless network incorporating a system of the present invention.
FIG. 2 is a flowchart generally describing the premium calculation and payment charging process for a wireless communications device that is connected to the network using a prepaid subscription plan;
FIG. 2A is an example of the screen display of a mobile device that will be provided for two steps of the sequence flow of Figure 2;
FIG. 3 is a flowchart describing the recording of usage-based data pertinent to usage of the wireless communications device and the use of this data in relation to wireless handset insurance cost and cover determination;
FIG. 4 is a flowchart describing the recording of location-based data pertinent to usage of the wireless communications device and the use of this data in relation to wireless handset insurance cost and cover determination;
FIG. 5 is a flowchart generally describing the premium calculation and payment charging process for a wireless communications device that is connected to the network using a postpaid subscription plan;
FIG. 6 is a flowchart generally describing the process whereby, based on monitoring usage data, the system copies the software and data from the user's device across the mobile network to a back-up storage location at appropriate times; and
FIG 7 is a flowchart generally describing the process whereby during the claims fulfilment process the software and data from the user's lost / damaged device which has been stored in a back-up location is restored to the user's replacement device through transfer across the mobile network.

### Detailed Description Of The Drawings

The invention will now be described with reference to the following drawings.

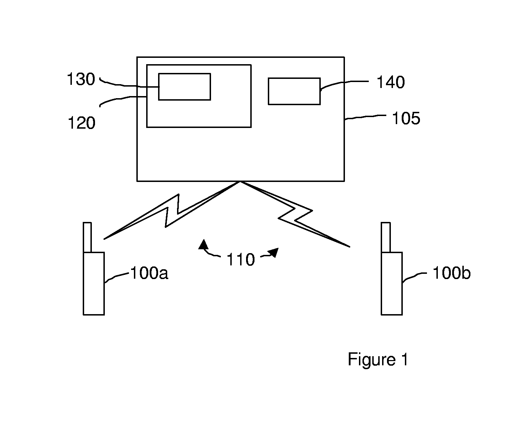

Figure 1 shows, in very simplified schematic form, a mobile network. Two or more users having mobile devices 100a, 100b, may communicate with each other through wireless communication links or channels 110 provided by a mobile network operator 105. The mobile network operator (MNO) 105 maintains a database of subscribers to the system and only allows those users who are authorised to use the network to generate traffic within the network. The traffic generated by a user is monitored by the operator and is used for billing purposes. In the case of a post paid account, the traffic over a predetermined time period, usually monthly, is monitored and the user is invoiced an appropriate amount for that traffic at the end of the month. If the user has also subscribed for insurance, an appropriate tariff is included in the invoice at the time of creation. It will be appreciated that the insurance tariff is not calculated at the time of usage of the network, and its value is not related to the volume or nature of the traffic.

In the case of pre paid users, the user establishes an account with the network and subsequent traffic effects a decrement of the credit in that account. The account details are stored in a billing module 120 incorporated within the network, the billing module interfacing with components of the network that monitor traffic and activity within the network so that users can be appropriately billed. The user can continue to make calls as long as there is sufficient credit in their account, and once that credit is reduced it is necessary for the user to effect what is termed a "top-up", the addition of more credit to the account. The undertaking of a top-up operation typically involves the user purchasing an activation code for a specific value and transmitting that activation code in the form of a data message to the network. The network receives the message, associates the message with the account of that user, and adds the appropriate value to the account. Such operation will be well known to the person skilled in the art. It will be appreciated that the decrement of the account is specific to the volume of traffic- be it voice or data- generated by that user. Heretofore the top-up value was restricted to telecom type charging such as calls, data messages, ring-tones and the like.

In accordance with the present invention an additional set of hardware and software functionality, termed an insurance module 130, is interfaced with the billing module, so as to enable a user to avail of insurance for their mobile device. The insurance module of the present invention is advantageous in that it enables the insurance premium that is calculated for a specific user to be related to that specific user's activity within the network. Furthermore, as the insurance module is interfaced with the billing module of the MNO it represents a more efficient manner to pay for insurance for mobile devices, particularly in the case of pre paid subscribers. The insurance module 130 may also be adapted to provide a storage capacity which will contain software and data that has been backed-up from insurance subscribers' mobile devices across the mobile network. The insurance module also contains a timing system adapted to decide an appropriate time to update the back-up copy of the user's device software and data based on the monitoring of device usage. In such instances of providing a back-up operation the insurance module may also provided functionality for enabling a restoring a user's software and data to a new mobile device during the insurance claim fulfilment process. In a modification to such an embodiment the actual storage of the backup data may not be provided on the server(s) providing the insurance module but on an additional external data source provider. In such an instance the insurance module will simply include information as to where that data is stored so as to enable as seamless transfer of information between the mobile device and the network.

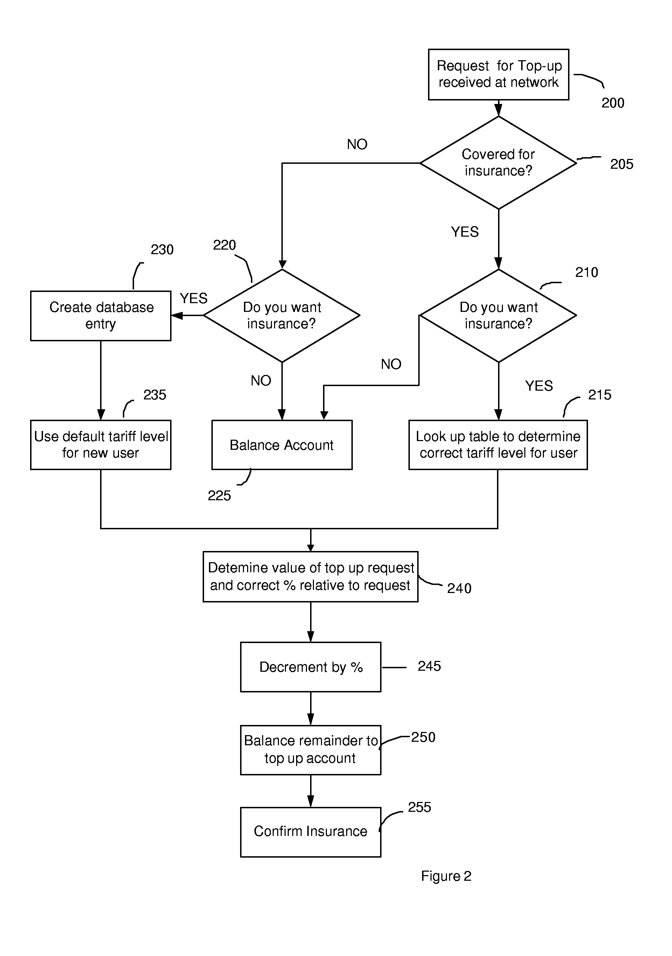

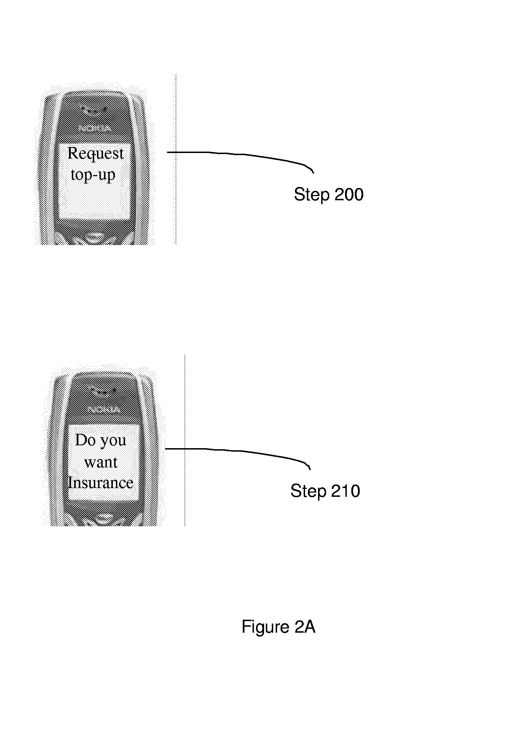

Figure 2 shows a methodology according to the present invention which is adapted to enable a pre paid user to avail of insurance through their pre-paid account. The user requests a top up of the account in the form of a data request to the network, which is received at the network (Step 200). The data request may be of the form of a short form message to a specific number within the network or of another form, as will be appreciated by those skilled in the art, and therefore requires no hardware modification to the mobile device. On receipt of the request for a top-up, the network is adapted to ascertain whether that user is a subscriber to the available insurance policy (Step 205). This is typically achieved by checking an identifier associated with the mobile device request and specific to the mobile device, such as the device IMSI, with a datastore of users that are currently insurance subscribers or that have previously subscribed and are not currently covered. The details of insurance subscribers are storeable in the insurance module 130 described in figure 1.

If it is determined that the request is from a user that has previously availed of the insurance, the user may then in certain embodiments of the invention be queried by the network whether they wish to use a portion of this top-up to continue their insurance (Step 210). If they answer in the affirmative, then a correct tariff level for that user is determined, based on their previous historical network usage (Step 215). At this point the user may also be queried as to whether they simply want cover for the replacement / repair of the mobile device only or if they also want cover relating to the loss of software and / or data that resides on the device.

If the known user does not want insurance on this specific top up request then the total value of the top up request is routed to their account in the normal way (Step 225).

If as a result of the query of Step 205 it is ascertained that the user is not a previous subscriber to the system then the user is queried as to whether they wish to avail of insurance from this moment on (Step 220). If they answer in the negative then the total value of the top up request is routed to their account in the normal manner (Step 225). If they answer in the affirmative, then a database entry in the insurance module (130) is created for them (Step 230). A correct tariff level for that user, based on a default tariff level for all new users is then associated with that user as the correct tariff level for insurance (Step 235).

Once the correct tariff level for both new and already subscribed users is determined (Steps 215/235) then the value of the specific top up request is evaluated and either a fixed amount or a % value of that top-up request or a combination of fixed amount and % value of that top-up request is associated with a contribution towards the insurance (Step 240). The value determined for the contribution towards the insurance requires an analysis of the frequency of top-up requests effected by that user, as it will be appreciated that if a user tops up more regularly then the contribution taken from each top up request towards insurance will be less than for a user that tops up irregularly. Such analysis of the frequency of top-up requests made by a user requires a monitoring of the traffic within the network. The actual value will be related both to the tariff level for that specific user and also the value of the top-up. It will be appreciated that the contribution from the top up request to the insurance payment cannot normally be such as to dilute the top up value by so much as to not leave any value remaining for actual network usage. Tariff levels for specific users will typically be proportional to their regularity of top-up, which is related to their usage of their mobile device within the network.

The top up request is decremented by that determined fixed amount or % (Step 245), the remaining portion of the top up request is credited to their top up account in the normal manner (Step 250) and the user is informed that they are now covered by insurance (Step 255).

It will be appreciated that the system of the present invention is adapted to interface with existing tariff and billing modules associated with mobile telecommunication networks. In accordance with the present invention the request for a top-up is not routed directly to the top-up database. Instead, the request is intercepted by an insurance module (130) provided by the system of the invention. Once the insurance is requested, the insurance module determines whether insurance cover is in place for this specific user. This requires the use of a look up table wherein a list of registered insurance subscribers are provided and against which incoming requests for top up may be assessed. If there is no match within this comparison step and the user requests insurance, then the table is updated to identify a new user. If insurance is not requested, either by an existing subscriber or by a user who has never subscribed, then the top up continues in the previous normal fashion.

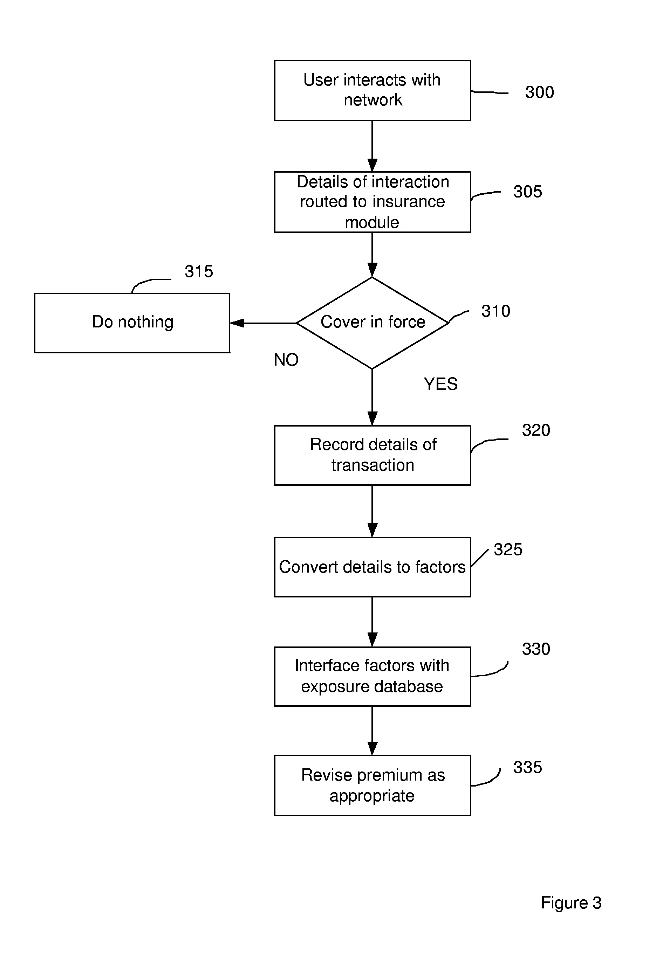

The system of the present invention enables a modification of the appropriate tariff for users depending on their usage of their mobile device. It will be appreciated by those skilled in the art that if for example a device is used more frequently than one which is used less frequently that the chance of a claim being made against the insurance - either arising from loss, theft or breakage - will increase. The risk to the insurer is therefore greater. Heretofore it was not possible to include this risk analysis in the calculation of a correct tariff for individual users. Using the system of the present invention the network usage by a user is constantly analysed and the appropriate risk sector for that user updated based on their network behaviour. Ideally, the insurance database and premium calculation engine will be continuously calculating the appropriate rate / amount to be charged based on data added incrementally to the database based on usage. Therefore, the premium charge rate / amount will be ready for use as soon as the pre-paid user requests a top up. Figure 3 shows an example of how this is achieved using the system and methodology of the invention.

It will be appreciated by those skilled in the art that every interaction that a mobile device makes with a mobile telecommunications network is monitored by the network. These interactions can vary from the user routing a voice or data message through the network to another mobile device, to downloading services or simply to moving from cell to cell within the network. In accordance with the present invention each interaction is monitored by the network (Step 300) and details of specific predefined interactions are then routed to the insurance module (130) of the present invention (Step 305). The insurance module ascertains whether insurance has been selected for that particular user (Step 310) and if it has not processes the information no further (Step 315). If there is insurance in place for the user then the details of the transactions are noted (Step 320) and then converted into factors suitable for inputting to an actuarial or similar model (Step 325). Such an actuarial model is provided in an exposure database where appropriate tariffs depending on usage are maintained. The model receives the factors (Step 330) and updates the specific tariff schema for that particular user (Step 335). The next time that the user requests a continuation of their mobile device insurance the tariff that they pay will depend on their previous activity.

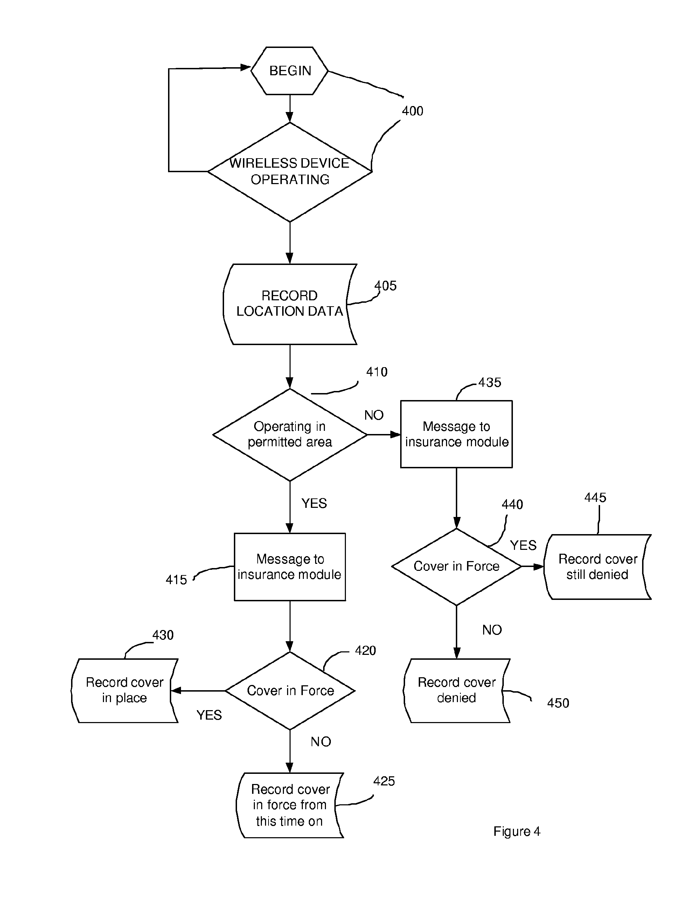

It will be appreciated that as the insurance calculation and provision module of the present invention is interfaced directly with the billing module of the telecommunications network that it may take advantage of the information that is provided to the network by the usage pattern of the user of the mobile device. Figure 4 shows an example of how the system of the present invention may be adapted to apply or discontinue insurance for a specific user depending on the activity of the user. The system is adapted to monitor the operation of the wireless device (Step 400) and to effect a recordal of the location where that device is being used (Step 405). Such monitoring and recordal may be effected using standard analysis of cell traffic as will be appreciated by the person skilled in the art, and as was described above with reference to Figure 3. By predefining one or more locations as non-permitted locations, then the usage pattern can be compared to the allowed usage pattern (Step 410). If usage is maintained within the permitted areas, then this may be communicated to the insurance module (130) (Step 415) so as to continue cover. Initially the database is queried to ascertain whether cover is still in place (Step 420). If it has been previously discontinued, then it is re-established (Step 425). If it is already in place, then this is continued (Step 430).

However, if usage is in an area not permitted within the defined parameters of the system, then a message to the insurance module is communicated to this effect (Step 435). Again the existence or otherwise of cover is assessed (Step 440). If cover is in place then it is denied from this period on (Step 445). If it is not in place then this fact is continued (Step 450).

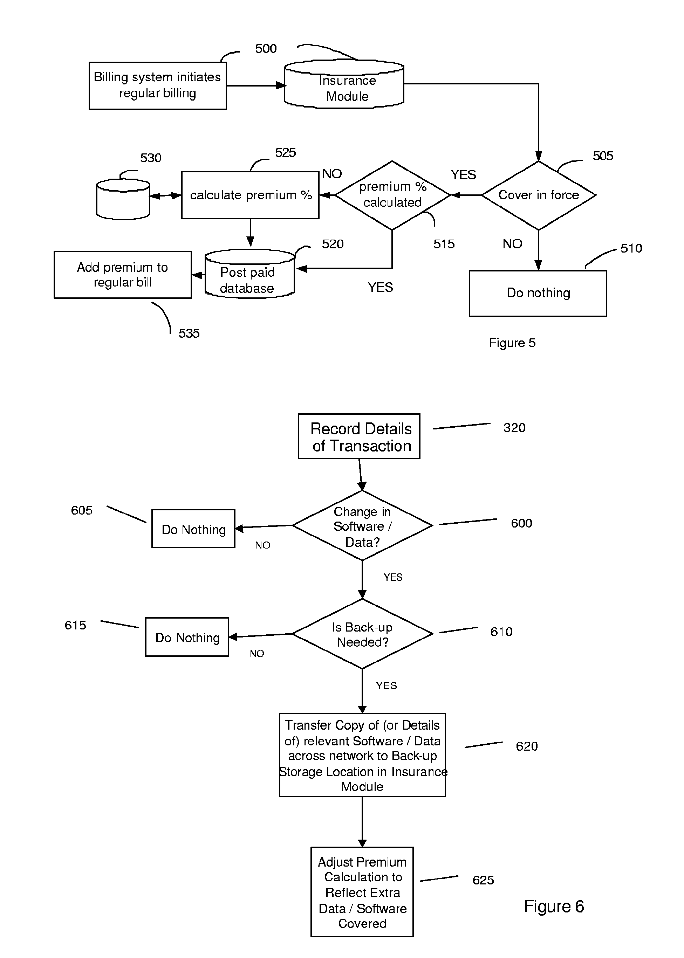

Although of primary application for a pre-paid environment where an effective mobile device insurance charging and payment system was not previously available the system of the present invention also has application in the post-paid environment. To date, the insurance premium that a user has paid for their mobile device has little or no relevance to the usage of the specific user. This is a disadvantage both in the fact that careful users cannot be rewarded and also users whose activity put their chance of risk at a higher level cannot be identified and charged appropriately. Figure 5 shows how a system of the present invention may be interfaced within a post paid environment to calculate an appropriate insurance tariff based on the user activity within the network. In accordance with normal practice, user traffic over the network initiates the generation of an appropriate tariff for that traffic (Step 500). Details of the tariff are then routed to a insurance module (130) provided by the system of the present invention. The insurance module determines whether insurance cover is in place for this specific user (Step 505). This requires the use of a look up table wherein a list of registered insurance subscribers are provided and against which the details of this user are checked. It will be appreciated that such datastores of subscribed users already exist for post-paid customers but heretofore have never been accessed or interfaced directly by the telecommunications network on the basis of the network traffic generated by specific users. If there is no match within this comparison step, then there is no further interaction between the components provided by the present invention and the existing billing module of the network operator (Step 510).

If a match is determined, then the cover database module is adapted to determine whether a premium appropriate to this user has been generated (Step 515). If a premium has been calculated, then the appropriate premium is associated with that user and a premium database is updated (Step 520). If a premium is not calculated for this user, then an appropriate premium is calculated (Step 525) using a premium calculation module. The calculation of an appropriate premium requires an interface (Step 530) between the premium calculation module with an established exposure database, the exposure database including appropriate rules for effecting an appropriate premium for a user or class of users. Once the appropriate premium has been calculated then the calculated premium is routed to the premium database (Step 535). The calculated premiums are then incremented against the usual tariffs for that user and invoiced during the regular billing period. Both the premium calculation module and exposure database are located within the insurance module (130) provided by the system of the present invention

As detailed above, the system of the present invention may provide in certain preferred embodiments for a back up of data from the mobile devices of subscribers. Figure 6 shows an example of how a system of the present invention creates a back-up copy of the software and data stored on the user's mobile device for restoration in the event of an insurance claim arising from loss / damage to the device. As was described with reference to Figure 3 above, the present invention monitors and records the operation of the device by the user. Part of this process is the recordal of details of the transaction (Step 320). At this point the system checks to determine whether or not the software and / or data stored on the mobile device has been altered (Step 600). If there has been no alteration the system does not perform any back-up operations at this time (Step 605). If the software and / or data on the mobile has been altered then the system determines whether or not a back-up operation is needed at this time (Step 610). If the system determines that no back-up is needed then the system does not perform any back-up operations at this time (Step 615). The method for determining whether or not a back-up operation is needed could be based on a number of parameters including for example:
whether or not the user has paid for this insurance service in the past,
the degree to which the software / data residing on the device has been altered based on monitoring the network traffic or activity conducted by the user.

Depending on bandwidth considerations if the alteration has been small the system may decide that it is inefficient to perform a back-up operation. If Step 610 determines that a back-up operation is needed then the system will transfer a copy of the software / data from the device to a back-up storage location in the insurance module (130) (Step 620). This "copy" of the software/data may not be an exact copy of the data - it may simply be details of the software / data or a compressed representation of the software / data in order to make the transfer and storage operation more efficient. The system will determine the optimal method for performing the back-up operation regarding the exact method used. Finally, after performing the back-up operation the system will adjust the premium calculation method for the relevant subscriber to reflect the extra degree of cover now being provided by the insurance system (Step 625).

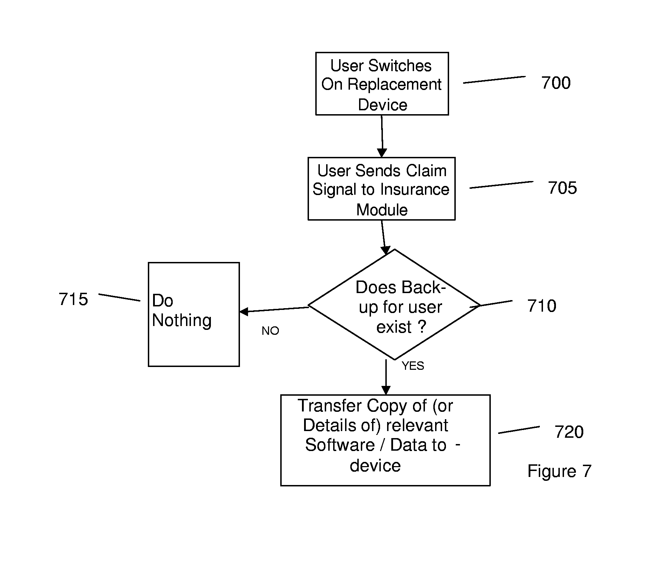

Figure 7 shows how a system of the present invention uses the backed-up stored information about the software and data that was on a user's mobile device to replace lost software and data in the case of loss / damage to the device. This process will occur during the fulfilment of an insurance claim for loss / damage to a mobile device by the user. The user initially switches on the replacement device that has been supplied by the insurance provider (Step 700). The user then sends a claim signal to the insurance module (130) (Step 705). This indicates to the insurance module that the user has been issued with a new device and that a claim is being fulfilled. The insurance module will then search the back-up storage location to determine if backed-up information has been stored by the system during the period when the user was using the old device and was paying for insurance back-up services (Step 710). If there is no back-up information that has been stored for the user then the system does not perform any restoration of software / data (Step 715). If there is back-up information that has been stored for the user then the system restores the relevant software and / or data to the replacement device across the mobile network (Step 720). In the case where the actual software / data to be replaced has been backed-up in its entirety then it is simply transferred back across the mobile network. However, if the software / data was not stored in its entirety but details were stored then initially the software / data will be recreated on the insurance module by querying appropriate external systems to obtain the complete software / data. Then the complete software / data is transferred across the network and restored to the user's new device.

It will be appreciated that traditionally, a wireless communications device user is charged for insurance based upon statistical averages related to the insurer's loss experience with other users who own similar devices in a similar geographic area. The invention allows for the measure of the actual data while the device is being used. Such data measurement will allow the device user to directly control his/her insurance costs by operating the device in a manner which he/she will know will evidence superior care of use and a minimal risk of generation of an insurance claim. Examples of data which can be monitored and recorded include:
Frequency of voice call usage
Time of voice call usage
Frequency of text message usage
Time of text message usage
Value of items downloaded to phone
Length of time for which phone is activated

The calculation of an appropriate tariff based on user activity may be used in a real time environment to effect an appropriate tariff for that user for their insurance. This may be added to either a post paid insurance account, for subsequent invoicing, or decremented from a top up request at the time of top up. As such the premium is more directly attributable to the usage of the device and can be tailored individually. Additionally the user may now avail of insurance through prepaid environments, something that heretofore was not possible.

It will be appreciated that the traditional form of mobile device insurance cover only provides a replacement device in the event of a claim from the user for loss / damage to their existing device. This invention allows for the creation of a system that also provides cover for the software and data that resides on the mobile device. This extra cover will be particularly appreciated as mobile devices become more complex and a progressively greater amount of the value derived from their use is based on the software and data stored on them.

The words comprises/comprising when used in this specification are to specify the presence of stated features, integers, steps or components but does not preclude the presence or addition of one or more other features, integers, steps, components or groups thereof.

## Claims

1. A mobile telecommunication network having a billing module with an insurance module associated therewith and being adapted to enable a mobile device user to avail of insurance for their mobile device, the mobile device user being a pre-paid subscriber to the network, the network including:
a) means for receiving a request for a top-up from the user,
b) means for determining whether the request is received from a user who is a subscriber to the insurance module,
c) on determining that the user is a subscriber to the insurance module, means for determining a correct tariff for the user, and
d) means for decrementing the correct tariff from the top-up request and to route the remaining portion of the top-up request to the billing module.

2. The network as claimed in claim 1 further comprising communication means adapted to effect a communication with the mobile user to determine whether the user wishes to subscribe for insurance.

3. The network as claimed in claim 2 being further adapted to enable a user to selectively activate insurance coverage for their mobile device such that a user may decide on each top-up request whether to activate insurance, the network being adapted to record details of time periods when specific users are covered by insurance.

4. The network as claimed in any preceding claim wherein the means for determining a correct tariff for the specific user determines the tariff based on the user activity within the mobile network.

5. The network as claimed in any preceding claim being further adapted to monitor the usage pattern of the mobile device and to restrict insurance to permitted geographic areas, such that on determining that a specific mobile device is being used outside a permitted area, a communication is transmitted from the network to the user informing them that their insurance is suspended.

6. The network as claimed in any preceding claim being adapted to monitor the usage pattern of the mobile device and to determine when the user has added software and / or data to the device between system defined time intervals.

7. The network as claimed in claim 6 being adapted to transfer a copy of at least a portion of software and/or data stored on the user's mobile device to a back-up storage location.

8. The network as claimed in claim 7 being adapted to transfer a copy of a user's previously backed-up software and/or data from the back-up storage location across the network onto a user's new device that has been provided as part of the process of fulfilling an insurance claim.

9. The network as claimed in any preceding claim wherein the means for determining a correct tariff for the user determines a tariff as a percentage of the top up request value.

10. The network as claimed in any one of claims 1 to 8 wherein means for determining a correct tariff for the user determines the tariff as a fixed value.

11. The network as claimed in any preceding claim wherein the means for determining a correct tariff for the user determines the tariff dependent on the frequency of top-up requests made by that user.

12. The network as claimed in any preceding claim wherein the insurance module is further adapted to interface with a post-paid billing module of the network, the network further including means for monitoring the usage pattern of a post-paid user such that the usage pattern may be used to associate the user with a specific risk factor to enable a correct insurance premium to be calculated for that specific user.

13. The network as claimed in any preceding claim further including communication means adapted to effect a communication with a user of the network so as to inform them whether they are covered by insurance or not.

14. The network as claimed in claim 13 wherein the communication is effected using a data communication message.

15. The network as claimed in any preceding claim wherein the means for determining whether the request is received from a user who is a subscriber to the insurance module effects an interaction with a look-up table associated with the insurance module so as to ascertain whether an identifier associated with the top-up request is associated with a subscriber to the insurance module.

16. The network as claimed in claim 15 wherein on determining that the user is not a subscriber to the insurance module, the network further includes interrogatory means adapted to ascertain whether the user wishes to become a subscriber to the module.

17. The network as claimed in any preceding claim wherein the correct tariff is determined by monitoring the frequency or regularity of top-up requests made by the user and assigning the user to a class of subscriber specific to that frequency, each class of subscriber having a different fixed tariff value.

18. A computer implemented method of providing mobile device insurance to a pre-paid subscriber to a mobile network, the method including the steps of:
a) establishing on the network a database of subscribers to insurance,
b) monitoring requests for top-ups from subscribers to the network,
c) establishing whether the requests for top-ups are received from subscribers to insurance,
d) determining a correct tariff for insurance for a subscribed user,
e) decrementing the top-up request by the correct tariff, and
f) balancing the remainder of the top-up request to an existing telecommunication account for that user.

19. The method as claimed in claim 18 wherein subsequent to step c) and prior to step d) the method further comprises the step of:
establishing whether the subscribed users wishes to decrement a portion of this top-up request for insurance purposes, and only proceeds to step d) on determining that it is desired.

20. The method as claimed in claim 18 wherein on establishing that a user is not a subscriber to insurance, the method is adapted to carry out the steps of:
establishing an account for that user if that user wishes to avail of insurance.

21. The method as claimed in any one of claims 18-20 further including the steps of monitoring the traffic conducted by a user within the network and using that traffic to establish a risk analysis pattern for that user.

22. A computer program which when running on a computer is adapted to carry out the method steps of any one of claims 18-21.
